# EUROPEAN PATENT APPLICATION

(11) **EP 3 258 691 A1**
(43) Date of publication of application: **20.12.2017**
(21) Application number: 15874402.9
(22) Date of filing: 09.02.2015
(51) Int. Cl.: H04N 19/436

(54) **IMAGE COMPRESSION/DECOMPRESSION DEVICE**

(71) Applicant: Hitachi Information & Telecommunication Engineering, Ltd., Kanagawa-ken 220-6122 (JP)
(72) Inventor: SAITO Kazunori, Yokohama-shi Kanagawa 220-6122 (JP); KOMI Hironori, Yokohama-shi Kanagawa 220-6122 (JP); KASHIHARA Yoshimasa, Yokohama-shi Kanagawa 220-6122 (JP); YATABE Yuusuke, Yokohama-shi Kanagawa 244-0817 (JP)
(74) Representative: Strehl Schübel-Hopf & Partner
(86) International application number: PCT/JP2015/053501
(87) International publication number: WO 2016/129031

(57) **Abstract**

A device that performs an image compression/decompression process of compressing original image data based on encoding and decompressing encoded data includes one or more image processing units and one or more variable length encoding/decoding processing units, and the image processing units perform a parallel process according to a parallel number based on a resolution of an image or a frame rate, and the variable length encoding/decoding processing units perform a parallel process according to a parallel number based on a bit rate of a bit stream processed by the image compression/decompression device. In the image compression/decompression device, both of the resolution of the image and the frame rate or either of the resolution of the image and the frame rate is input as a parameter to decide the parallel number. Thus, it is possible to reduce power consumption according to a use purpose of a user in which a resolution, a frame rate, and a bit rate are considered.

## Description

### TECHNICAL FIELD

The present invention relates to an image compression/decompression device, and more particularly, an image compression/decompression device, which is suitable for performing an encoding/decoding process of image processing based on a video compression coding technique such as a H.264 standard at low power consumption.

### BACKGROUND ART

A technique of compressing (encoding) and decompressing (decoding) an image using an MPEG compression technique has been used in a digital image processing device. An ISO/IEC standard 23008-3 (commonly known as H.265/HEVC) was approved as an international standard on January 2013. As a result, an image compression/decompression technique is expected to be further widely used in consumer AV devices or industrial equipment.

As a future tendency, images are expected to pursue a higher resolution, a higher pixel rate, and a lower bit rate as represented by an 8k4k next generation broadcasting standard (a so-called super high vision standard: Ultra High Definition Television (UHDTV), and thus it is necessary to satisfy a wide range of needs of users such as an image size of a related art or a high bit rate. In this circumstance, a technique in which power consumption is considered is disclosed, for example, Patent Document 1.

### CITATION LIST

### PATENT DOCUMENT

Patent Document 1: JP 2008-141531 A

### SUMMARY OF THE INVENTION

### PROBLEMS TO BE SOLVED BY THE INVENTION

An image encoding device disclosed in Patent Document 1 includes a buffer between a binarization unit 301 and a binary arithmetic encoding unit 304, and power consumption can be reduced such that a process clock of the binarization unit 301 is made different from a process clock of the binary arithmetic encoding unit 304, and an appropriate operation frequency is allocated to each processing unit.

Meanwhile, indices indicating an operation environment of a moving image include a resolution, a frame rate, and a bit rate. A load and power consumption when an image processing processor encodes a moving image are largely concerned with the indices. The image encoding device disclosed in Patent Document 1 can implement low power consumption according to an output bit rate, but low power consumption related to a resolution and a frame rate is not considered.

It is an object of the present invention to provide an image compression/decompression device which is capable of reducing power consumption according to the user's use purpose while considering a resolution, a frame rate, and a bit rate.

### SOLUTIONS TO PROBLEMS

An image compression/decompression device according to the present invention is preferably a device that performs an image compression/decompression process of compressing original image data based on encoding and decompressing encoded data, the device including one or more image processing units each of which perform predicted image generation, differential image generation, frequency transform, quantization, and inverse quantization by intra prediction or inter prediction and one or more variable length encoding/decoding processing units each of which performs a variable length encoding/decoding process. A first parallel number is decided based on a resolution or a frame rate of an image, and the one or more image processing units perform a parallel process based on a degree of parallelism according to the first parallel number.

In a preferred example, a second parallel number is decided based on a bit rate of a bit stream processed by the image compression/decompression device, and the one or more variable length encoding/decoding processing units perform a parallel process based on a degree of parallelism according to the second parallel number.

In a preferred example, the one or more image processing units receive both of the resolution of the image and the frame rate or either of the resolution of the image and the frame rate as a parameter in order to decide the first parallel number.

### EFFECTS OF THE INVENTION

According to the present invention, it is possible to provide an image compression/decompression device which is capable of reducing power consumption according to the user's use purpose while considering a resolution, a frame rate, and a bit rate.

### BRIEF DESCRIPTION OF THE DRAWINGS

FIG. 1 is an overall configuration diagram illustrating a configuration of an image compression/decompression device according to an embodiment.
FIG. 2 is a diagram for describing a mode in which parallel numbers of an image processing unit and a variable length encoding/decoding processing unit are decided.
FIG. 3 is a diagram for describing a relation between an image (1 frame) and a macro block when a parallel number of an image processing unit is 1.
FIG. 4 is a diagram illustrating an example in which an image processing unit processes macro blocks in units of times for each process stage.
FIG. 5 is a diagram illustrating an example in which data is transferred from the external memory to the image processing unit and the variable length encoding/decoding processing unit when the image processing unit of one system and the variable length encoding/decoding processing unit of one system operate at the time of a compression operation.
FIG. 6 is a diagram illustrating an example in which data is transferred from the external memory to the image processing unit and the variable length encoding/decoding processing unit when the image processing unit of one system and the variable length encoding/decoding processing unit of one system operate at the time of a decompression operation.
FIG. 7 is a diagram for describing a relation between an image (1 frame) and a macro block in a plurality of image processing units.
FIG. 8 is a diagram illustrating an example in which a plurality of image processing units process macro blocks in units of times for each process stage.
FIG. 9 is a diagram illustrating an example in which data is transferred from the external memory to the image processing unit and the variable length encoding/decoding processing unit when the image processing units of four systems and the variable length encoding/decoding processing units of two systems operate at the time of a compression operation.
FIG. 10 is a diagram illustrating an example in which data is transferred from the external memory to the image processing unit and the variable length encoding/decoding processing unit when the image processing units of fourth systems and the variable length encoding/decoding processing units of two systems operate at the time of a decompression operation.
FIG. 11 is a flowchart illustrating a detailed process of an image compression process of an image compression/decompression device.
FIG. 12 is a timing chart illustrating pictures and process timings of respective units in an image compression process.
FIG. 13 is a flowchart illustrating a detailed process of an image decompression process of an image compression/decompression device.
FIG. 14 is a timing chart illustrating pictures and timings of processes of respective units in an image decompression process.
FIG. 15A is a diagram illustrating an example of controlling a parallel process of an image processing unit and a variable length encoding/decoding processing unit according to clock control.
FIG. 15B is a diagram illustrating an example of controlling a parallel process of an image processing unit and a variable length encoding/decoding processing unit according to power control.

### MODE FOR CARRYING OUT THE INVENTION

Hereinafter, exemplary embodiments of the present invention will be described with reference to the appended drawings.

### [Configuration overview of image compression/decompression device]

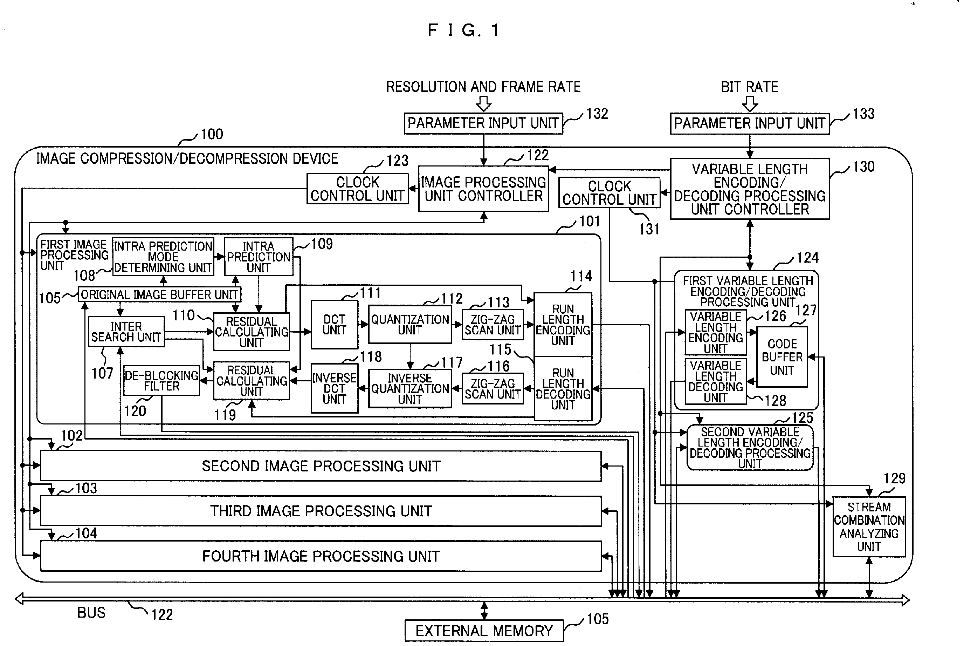

First, a configuration of an image compression/decompression device according to an embodiment will be described with reference to FIG. 1. FIG. 1 is an overall configuration diagram illustrating a configuration of an image compression/decompression device.

The image compression/decompression device is a circuit that performs an image compression/decompression process complying with a standard of H.264 (ISO/IEC14496-10), and a decompression device that performs a half-duplex process of an image compression process and an image decompression process. The image compression process is a process of receiving an original image (a YCbCr 4:2:0 format), sequentially storing the original image in an original image buffer (not illustrated in FIG. 1) arranged in an external memory 105, and encoding and compressing the original image. The image decompression process is a process of receiving bit streams sequentially stored in a stream buffer (not illustrated in FIG. 1) arranged in the external memory 105 starting from a Most Significant Bit (MSB), outputting a decoded image (a YCbCr 4:2:0 format), and sequentially storing the decoded image in a decoded image buffer arranged in the external memory 105.

A configuration of the present device is divided into an image processing unit that undertakes a motion compensation process and a variable length encoding/decoding processing unit that performs an entropy encoding process when the image compression/decompression process is performed.

A total of 4 systems perform the image processing, and each system has an equivalent function, and image processing units 101, 102, 103, and 104 can perform a parallel operation. A total of 2 systems perform the variable length encoding/decoding process, each system has an equivalent function, and a variable length encoding/decoding processing unit 124 and a variable length encoding/decoding processing unit 125 can perform a parallel operation. The present embodiment will be described with an example in which the image processing unit is configured with the 4 systems, and the variable length encoding/decoding processing unit is configured with the 2 systems as described above, but arbitrarily, the image processing unit may be configured with n systems, and the variable length encoding/decoding processing unit may be configured with m systems according to a request processing capability for the image compression/decompression device, a cost, or the like (n and m are positive integers).

The image processing units 101, 102, 103, and 104 and the variable length encoding/decoding processing units 124 and 125 perform data exchange through an intermediate buffer region (not illustrated in FIG. 1) arranged in the external memory 105.

### [Image compression process and image decompression process of image compression/decompression device]

Next, respective units of the image compression/decompression device according to the present embodiment and operations thereof will be described with reference to FIG. 1. First, an image compression process of the image compression/decompression device (hereinafter, also referred to simply as a "compression process") will be described.

An image processing unit 101 is activated by an image processing unit controller 122. The image processing unit 101 stores an original image in an original image buffer unit 106 from the external memory 105 via a bus 121. Then, an intra prediction mode determining unit 108 determines a prediction mode, and an intra prediction image is generated. A search unit 107 calculates a motion vector optimal to an inter prediction, reads a reference image at a position according to the motion vector from a reference frame region (not illustrated in FIG. 1) in the external memory 105 via the bus 121, and generates an inter prediction image. Then, a residual calculating unit 110 obtains a difference between either the inter prediction image or the intra prediction image and the original image, and generates a prediction residual. A prediction error is input to a next discrete cosine transform (DCT) unit 111. At this time, as for whether the inter prediction image or the intra prediction image is used, information of a side expected to be smaller in a subsequent code amount is selected according to a residual amount at that time. For example, this selection can be implemented even by obtaining an absolute value difference sum of residuals of respective macro block and selecting one that is smaller in the value. The DCT unit 111 performs an integer cosine transform on an input residual component to be transformed into a frequency sample, and outputs the frequency sample to a quantization unit 112.

Then, the quantization unit 112 divides the input data by a predetermined quantization scale. A zig-zag scan unit 113 reads the quantized frequency sample from a two-dimensional matrix in a zig-zag scan order, and outputs one-dimensional data. The residual calculating unit 110 transfers divisional information of a macro block and either the prediction mode (in the case of the intra prediction) or the motion vector (in the case of the inter prediction) to a run length encoding unit 114. Thereafter, the run length encoding unit 114 performs conversion for obtaining the number of consecutive zeros (0s) and non-zero coefficient data according to H.264 standard, and stores the number of consecutive zeros (0s) and the non-zero coefficient data in the intermediate buffer region (not illustrated in FIG. 1) arranged in the external memory 105 via the bus 121. After the process proceeds up to run length encoding, interim data is stored in an intermediate buffer, and an interim data amount is remarkably reduced from an original image data amount, and when the image processing unit performs even the run length encoding process, there is an advantage since both the bandwidth of the bus 121 and the external memory 105 can be reduced.

In parallel to the encoding work, in order to generate the reference image, an inverse quantization unit 117 multiplies each frequency sample divided by the quantization unit 112 by a predetermined quantization scale, and performs inverse quantization on the frequency sample. Then, the inverse DCT unit 118 performs an integer cosine transform on the frequency sample to be transformed into a residual component. Then, in the case of the intra prediction, an intra prediction unit 109 generates the intra prediction image based on the prediction mode, and in the case of the inter prediction, the search unit 107 reads the reference image at the position according to the motion vector from the reference frame region (not illustrated in FIG. 1) in the external memory 105 via the bus 121, and generates the inter prediction image.

Then, a residual calculating unit 119 adds either the intra prediction image or the inter prediction image to the residual component, and generates the predicted image. Thereafter, a de-blocking filter 120 removes block distortion, generates the reference image, and stores the reference image in the external memory 105 via the bus 121.

Next, an image decompression process of the image compression/decompression device (hereinafter, also referred to simply as a "decompression process") will be described.

When the image decompression process starts, a variable length encoding/decoding processing unit controller 130 activates the variable length encoding/decoding processing unit 124. The variable length encoding/decoding processing unit 124 reads the bit stream from the stream buffer (not illustrated in FIG. 1) arranged in the external memory 105 via the bus 121, and stores the bit stream in a code buffer unit 127. A variable length decoding unit 128 decodes the number of consecutive zeros, the non-zero coefficient data, the macro block divisional information, and either of the intra prediction mode or the motion vector according to the H.264 standard. The decoded data has a form in which a run (an appearance of a symbol) and a length (a length of a sequence of symbols) are detected when read from the rear according to a predetermined format and is stored in the intermediate buffer (not illustrated in FIG. 1) arranged in the external memory 105 via the bus 121.

After a process of one frame is completed by the variable length encoding/decoding processing unit 124, the variable length encoding/decoding processing unit controller 130 gives a notification to the image processing unit controller 122. The image processing unit controller 122 activates the image processing unit 101, and a run length decoding unit 115 of the image processing unit 101 acquires the interim data from the external memory 105 via the bus 121. The run length decoding unit 115 calculates all the frequency samples within the macro block based on the number of consecutive zeros and the non-zero coefficient data, and transfers the frequency samples to a zig-zag scan unit 116. Then, the zig-zag scan unit 116 outputs one-dimensional data in the two-dimensional matrix in the zig-zag scan order. Thereafter, the inverse quantization unit 117 performs multiplication using a predetermined quantization scale, and performs inverse quantization on the frequency sample. Then, the inverse DCT unit 118 performs the integer cosine transform on the frequency sample to be transformed into the residual component.

Then, in the case of the intra prediction, the intra prediction unit 109 generates the intra prediction image according to the prediction mode, and in the case of the inter prediction, the search unit 107 reads the reference image at the position according to the motion vector from the reference frame region (not illustrated in FIG. 1) in the external memory 105 via the bus 121, and generates the inter prediction image. Then, the residual calculating unit 119 adds either of the intra prediction image or the inter prediction image using the residual component, and generates the predicted image. Thereafter, the de-blocking filter 120 removes block distortion, and generates the decoded image, and stores the decoded image in the decoded image buffer (not illustrated in FIG. 1) arranged in the external memory 105 via the bus 121. The decoded image in the decompression process is also used as the reference image when the decompression process is performed.

### [Parallel numbers of image processing unit and variable length encoding/decoding processing unit]

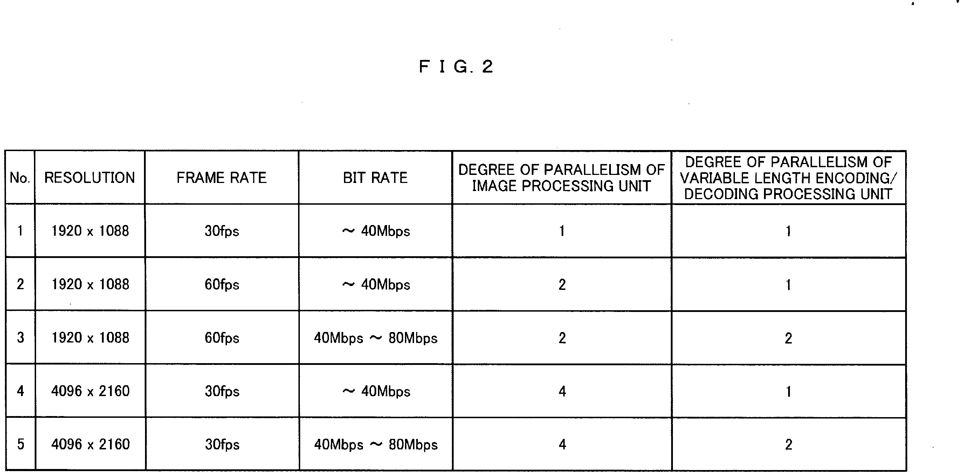

As described above, the image compression/decompression device according to the present embodiment is under the assumption that a plurality of image processing units and a plurality of variable length encoding/decoding processing units are arranged to independently operate in parallel. Next, the parallel numbers of the image processing units 101, 102, 103, and 104 and the variable length encoding/decoding processing units 124 and 125 will be described with reference to FIG. 2. FIG. 2 is a diagram for describing a mode of deciding the parallel numbers of the image processing units 101, 102, 103, and 104 and the variable length encoding/decoding processing units 124 and 125.

A processing time of the image processing unit is specified substantially depending on a pixel rate calculated by (resolution × frame rate). Here, the resolution is a numerical number indicating the density of pixels in a bitmap image, and the frame rate is the number of frames (the number of still images and the number of commas) that are processed per unit time. If the image processing unit 101 of one system illustrated in FIG. 1 is assumed to have a capability capable of performing a process at a frame rate of 30 fps with a resolution of 1920×1088, it is possible to perform a process at a frame rate of 60 fps with a resolution of 1920x1088 through a 2-system operation, and it is possible to perform a process at a frame rate of 30 fps with a resolution of 4096×2160 through a 4-system operation. Since the 4-system operation is four times the 1-system operation, when the resolution is 1920x1088, the frame rate may be 120 fps. In the present embodiment, the image processing unit decides the parallel numbers based on the pixel rate calculated by (resolution × frame rate), and causes the image processing units 101, 102, 103, and 104 to perform the parallel operation based on a degree of parallelism according to the parallel numbers.

A processing time of the variable length encoding/decoding processing unit changes depending on the bit rate of the bit stream. Here, the bit rate is a numerical number indicating the number of bits of data that are processed or transmitted or received per unit time. If the variable length encoding/decoding processing unit 124 is assumed to have a processing capability of 50 Mbps, the parallel number is assumed to be defined according to the bit rate transferred to the variable length encoding/decoding processing unit 124. Then, the variable length encoding/decoding processing units 124 and 125 perform the parallel operation based on a degree of parallelism according to the parallel number defined by the bit rate. Thus, it is possible to perform easy power control according to the use purpose.

Thus, as illustrated in FIG. 2, the parallel number may be calculated such that the parallel number of the image processing unit is 1, and the parallel number of the variable length encoding/decoding processing unit is 1 (a mode No. 1) when the resolution is 1920x1088, the frame rate is 30 fps, and the bit rate is less than 50 Mbs, the parallel number of the image processing unit is 2, and the parallel number of the variable length encoding/decoding processing unit is 2 (a mode No. 3) when the resolution is 1920x1088, the frame rate is 60 fps, and the bit rate is between 50 Mbs to 100 Mbs, and the parallel number of the image processing unit is 4, and the parallel number of the variable length encoding/decoding processing unit is 2 (a mode No. 5) when the resolution is 4096x2160, the frame rate is 30 fps, and the bit rate is between 50 Mbs to 100 Mbs.

When the resolution and the frame rate are set by a parameter input unit 132 of the resolution and the frame rate in advance as illustrated in FIG. 2, the image processing unit controller 122 includes a table of deciding the parallel number of the image processing unit corresponding thereto. For example, in a mode No. 2, the image processing unit is operated according to a degree of parallelism of a parallel number 2, and in a mode No. 5, the image processing unit is operated according to a degree of parallelism of a parallel number 4.

Further, when the bit rate is set by a parameter input unit 133 of the bit rate in advance as illustrated in FIG. 2, the variable length encoding/decoding processing unit controller 130 includes a table of deciding the parallel number of the variable length encoding/decoding processing unit corresponding thereto. For example, in the mode No. 2, the variable length encoding/decoding processing unit is operated according to the parallel number 1, and in the mode No. 5, the variable length encoding/decoding processing unit is operated according to a degree of parallelism of the parallel number 2.

As the bit rate is set as described above, an unnecessary circuit does not operate when data input to the variable length encoding/decoding processing unit is controlled such that a necessary variable length encoding/decoding processing unit is operated. Thus, the image processing unit controller 122 and the variable length encoding/decoding processing unit controller 130 can prevent an unnecessary data path from changing for each clock according to an operation mode desired by the user and can reduce power consumption when the image compression/decompression device operates.

The parameters may be input such that both the resolution and the frame rate, and the bit rate are variably input, the resolution and the frame rate are variably input, and the bit rate is fixedly be input, or the resolution and the frame rate are fixedly input, and the bit rate is variably input.

In the above example, the parallel number of the image processing unit is decided according to the resolution and the frame rate, and the parallel number of the variable length encoding/decoding processing unit is decided according to the bit rate, but the same low power effect can be obtained even when the respective parallel numbers are directly set by a register setting from an external host CPU or the like.

### [Operation in mode No. 1 (when parallel number of image processing unit is 1, and parallel number of variable length encoding/decoding processing unit is 1)]

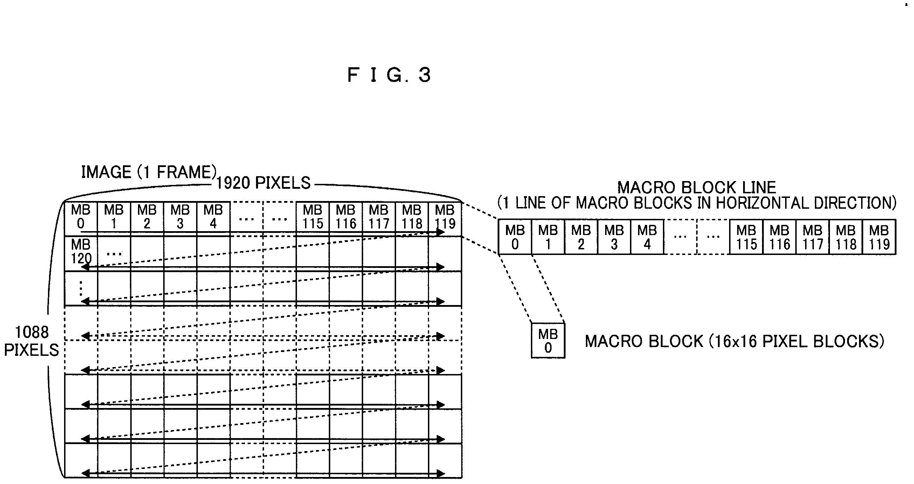

Next, the image compression process and the image decompression process in which the image compression/decompression device 100 of FIG. 1 operate according to the image processing unit parallel number 1 and the variable length encoding/decoding processing unit parallel number 1 indicated by the mode No. 1 of FIG. 2 will be described. First, a relation between an image (1 frame) and a macro block when the parallel number of the image processing unit is 1 will be described with reference to FIG. 3. FIG. 3 is a diagram for describing a relation between an image (1 frame) and a macro block when the parallel number of the image processing unit is 1.

As illustrated in FIG. 3, the image processing unit 101 reads the original image from an input image in a rightward horizontal direction starting from an upper left macro block MB0 (MB0, MB1, MB2, ...) in units of macro blocks of 16x16 pixels, and performs the compression process on the macro blocks. When the process on a macro block line (MB119) of one line starting from MB0 in the horizontal direction ends, the image processing unit 101 moves in the vertical direction by 16 pixels, and the process is repeated while moving rightward in the horizontal direction starting from a leftmost macroblock (MB120) until the process of one frame ends.

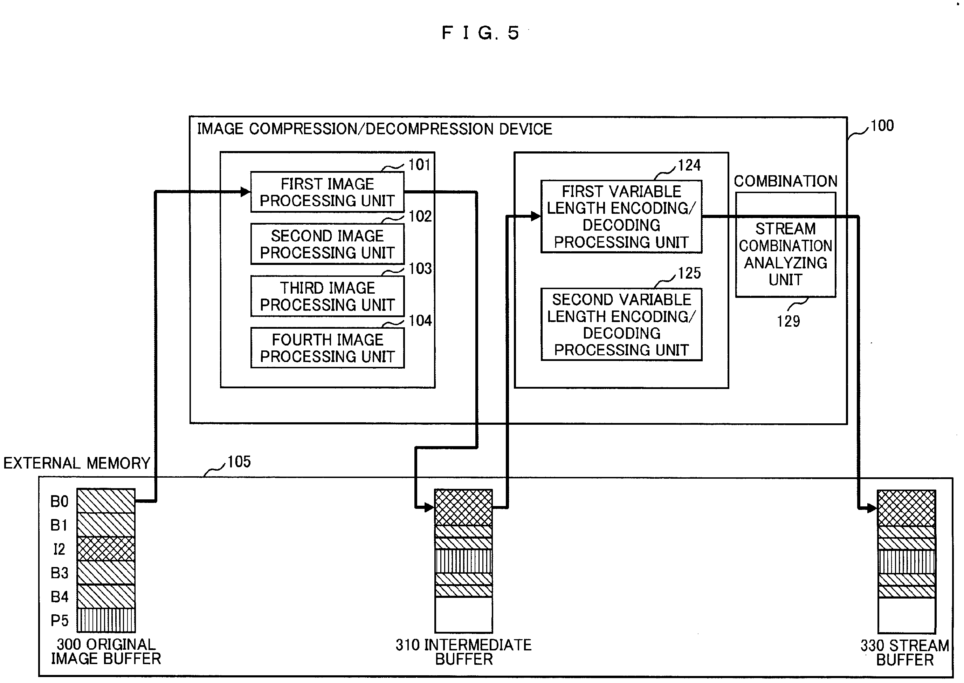

The original image is assumed to be input to an image input unit (not illustrated) and an original image buffer (illustrated in FIG. 5) of the external memory 105 sequentially (B0, B1, 12, B3, B4, P5, ...) in real time. In the drawings, as a type of the original image, "I" indicates an I picture (an intra coded picture), "P" indicates a P picture (inter predictive coded picture), "B" indicates a B picture (bipredictive coded picture), and a number indicates an input frame order when counting is performed from a 0-th frame of the original image. The above description is a description of the flow of a series of macro block processes, and sub information such as neighboring macro block information is not included.

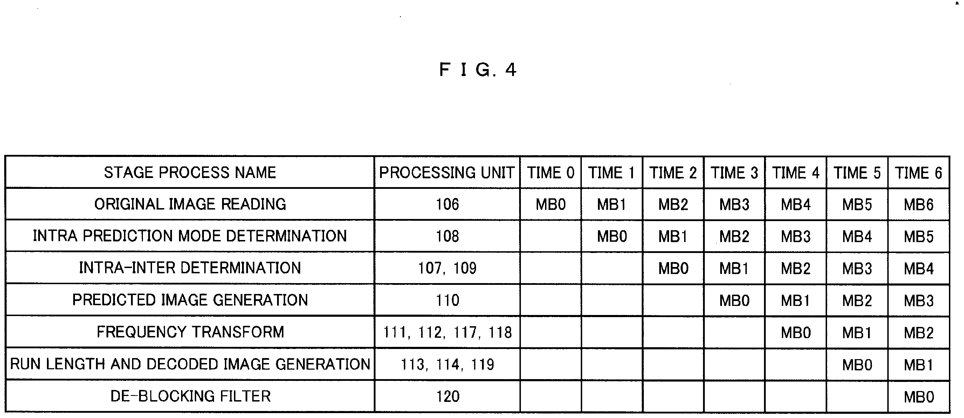

Next, an example of a macro block pipeline process of the image processing unit 101 will be described with reference to FIG. 4.

FIG. 4 is a diagram illustrating an example in which the image processing unit 101 processes the macro blocks in units of times for each process stage. Referring to FIG. 4, an original image reading stage is a stage at which the original image buffer unit 106 operates, an intra prediction mode determination stage is a stage at which the intra prediction mode determining unit 108 operates, an intra-inter determination stage is a stage at which the intra prediction unit 109 and the search unit 107 operate, a predicted image generation stage is a stage at which the residual calculating unit 110 operates, a frequency transform stage is a stage at which the DCT unit 111, the quantization unit 112, the inverse quantization unit 117, and the inverse DCT unit 118 operate, a run length stage is a stage at which the zig-zag scan unit 113 and the run length encoding unit 114 operate, a decoded image generation stage is a stage at which the residual calculating unit 119 operates, and a de-blocking filter stage is a stage at which the de-blocking filter 120 operates.

A time 0 (a time 1, a time 2, ...) indicates a processing time necessary for each MB, indicates a period of time of about 100 cycles when a clock operation is performed at 200 MHz, and each stage is assumed to end within the time 0 (the time 1, the time 2, ...).

The macro blocks undergo the original image reading sequentially (MB0, MB1, MB2, ...) starting from an upper left of the image as illustrated in FIG. 3. Thereafter, the intra prediction mode determination and the intra-inter determination are performed, that is, the process stages undergo the pipeline operation. For example, at the time 3, the macro block MB3 is processed at the original image reading stage, the macro block MB2 is processed at the intra prediction mode determination stage, the macro block MB1 is processed at the intra-inter determination stage, and the macro block MB0 is processed at the predicted image generation stage.

The image processing unit 101 repeatedly performs the macro block process until the process of one frame ends as illustrated in FIG. 3.

After completing the process of one frame, the image processing unit controller 122 gives a notification to the variable length encoding/decoding processing controller 130. The variable length encoding/decoding processing unit controller 130 receives the notification from the image processing unit controller 122, and activates the variable length encoding/decoding processing unit 124. The variable length encoding/decoding processing unit 124 reads the interim data stored by the image processing unit 101 from the external memory 105 unit via the bus 121, and generates the bit stream compressed by a variable length encoding unit 126, and the code buffer unit 127 sequentially stores the bits in the stream buffer arranged in the external memory 105 starting from the MSB via the bus 121. As described above, the compression process is performed in units of frames until it ends, and the compressed bit streams are sequentially accumulated in the stream buffer.

Next, a process when the image processing unit of one system and the variable length encoding/decoding processing unit of one system operate at the time of a compression operation in the image compression/decompression device 100 will be described with reference to FIG. 5. FIG. 5 is a diagram illustrating an example in which data is transferred from the external memory to the image processing unit and the variable length encoding/decoding processing unit when the image processing unit of one system and the variable length encoding/decoding processing unit of one system operate at the time of a compression operation.

Referring to FIG. 5, the image processing unit 101 receives an image from an original image buffer 300 in a compression order (I2, B0, B1, ...), and sequentially stores the interim data in an intermediate buffer 310. The variable length encoding/decoding processing unit 124 reads the interim data from the intermediate buffer 310, compresses the interim data, and sequentially stores the generated bit stream in a stream buffer 330.

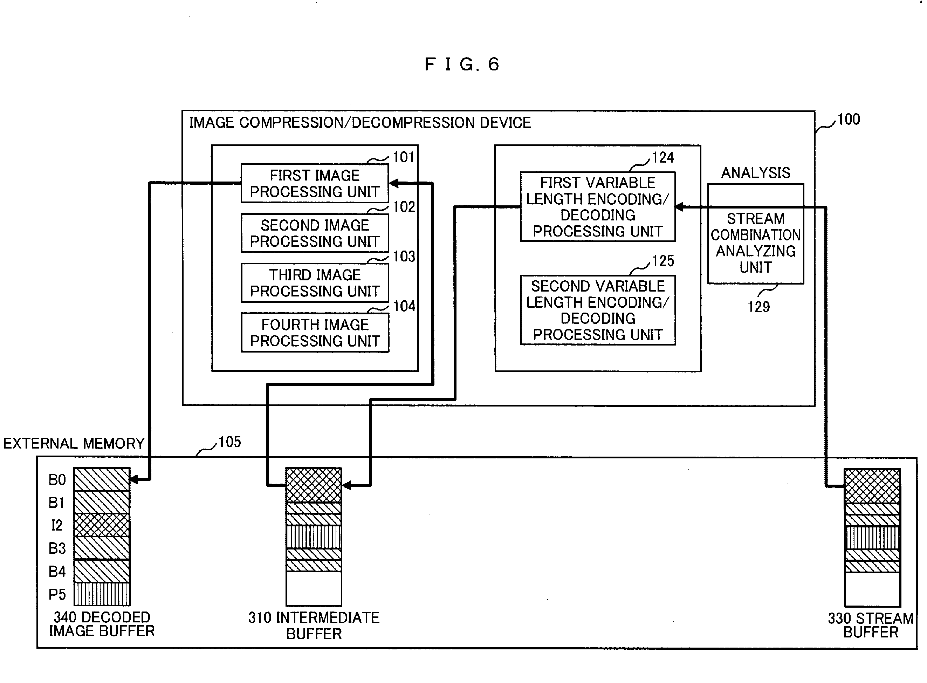

Next, a process when the image processing unit of one system and the variable length encoding/decoding processing unit of one system operate at the time of a decompression operation in the image compression/decompression device 100 will be described with reference to FIG. 6. FIG. 6 is a diagram illustrating an example in which data is transferred from the external memory to the image processing unit and the variable length encoding/decoding processing unit when the image processing unit of one system and the variable length encoding/decoding processing unit of one system operate at the time of a decompression operation.

The variable length encoding processing unit 124 acquires the bit stream from a stream buffer 330, and sequentially stores the interim data in the intermediate buffer 310. The image processing unit 101 reads the interim data from the intermediate buffer 310, performs the decompression process, and sequentially stores the generated decoded image in a decoded image buffer 340.

At this time, the decompression process of the image processing unit 101 repeats the macro block process in units of macro blocks of 16x16 pixels illustrated in FIG. 3 until the process of one frame starting from the upper left macro block MB0 ends, similarly to the compression process.

### [Operation in mode No. 5 (when parallel number of image processing unit is 4, and parallel number of variable length encoding/decoding processing unit is 2)]

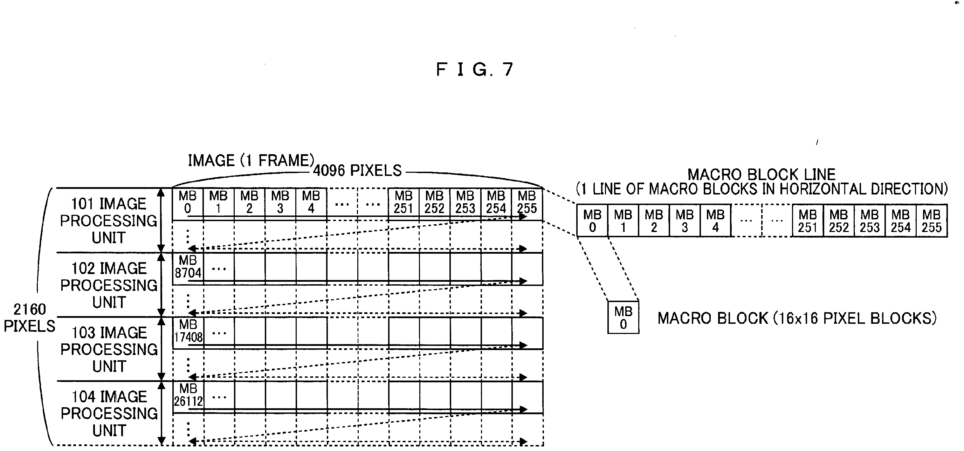

Next, the image compression process and the image decompression process in which the image compression/decompression device 100 of FIG. 1 operate according to the image processing unit parallel number 4 and the variable length encoding/decoding processing unit parallel number 2 indicated by the mode No. 5 of FIG. 2 will be described. First, a relation between an image (1 frame) and a macro block when the parallel number of the image processing unit is 4 will be described with reference to FIG. 7. FIG. 7 is a diagram for describing a relation between an image (1 frame) and a macro block when the parallel number of the image processing unit is 4.

In the parallel process in which a plurality of image processing units operate, one macro block line in the horizontal direction of the macro block is divided into four. The first image processing unit processes regions of MBs 0 to 8703, the second image processing unit processes regions of MBs 8704 to 17407, the third image processing unit processes regions of MBs 17408 to 26111, and the fourth image processing unit processes regions of MBs 26112 to 34559. Thus, in the 4-system operation compared to the 1-system operation, an operation of four times can be performed, and even when the resolution and the frame rate are high, the process can be performed in the same period of time as when the resolution is low.

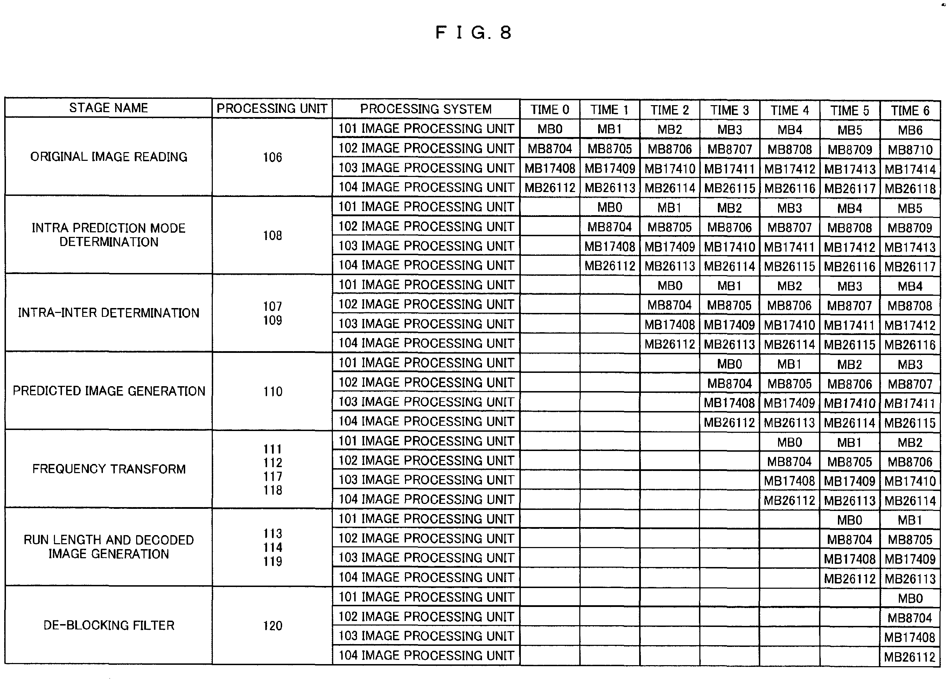

Next, an example of a macro block pipeline process at the time of the 4-system operation of the image processing units 101, 102, 103, and 104 will be described with reference to FIG. 8. FIG. 8 is a diagram illustrating an example in which the image processing units 101, 102, 103, and 104 process the macro blocks in units of times for each process stage.

When the 4-system operation is performed as the parallel operation, the same pipeline process as in the 1 system is performed for each of the different divided macro blocks as illustrated in FIG. 8. The image processing unit 101 sequentially performs original image reading of the macro blocks starting from an upper left of an image, that is, MB0, the image processing unit 102 sequentially performs original image reading of the macro blocks starting from MB8704, the image processing unit 103 sequentially performs original image reading of the macro blocks starting from MB17408, and the image processing unit 104 sequentially performs original image reading of the macro blocks starting from MB26112. Thereafter, the intra prediction mode determination and the intra-inter determination are performed, that is, the process stages undergo the pipeline operation. For example, at the time 3, the image processing units 101, 102, 103, and 104 process the macro blocks MB3, MB8707, MB17411, and MB26115 at the original image reading stage, process the macro blocks MB2, MB8706, MB17410, and MB26114 at the intra prediction mode determination stage, process the macro blocks MB1, MB8705, MB17409, and MB26113 at the intra-inter determination stage, and process the macro blocks MB0, MB8704, MB17408, and MB26112 at the predicted image generation stage.

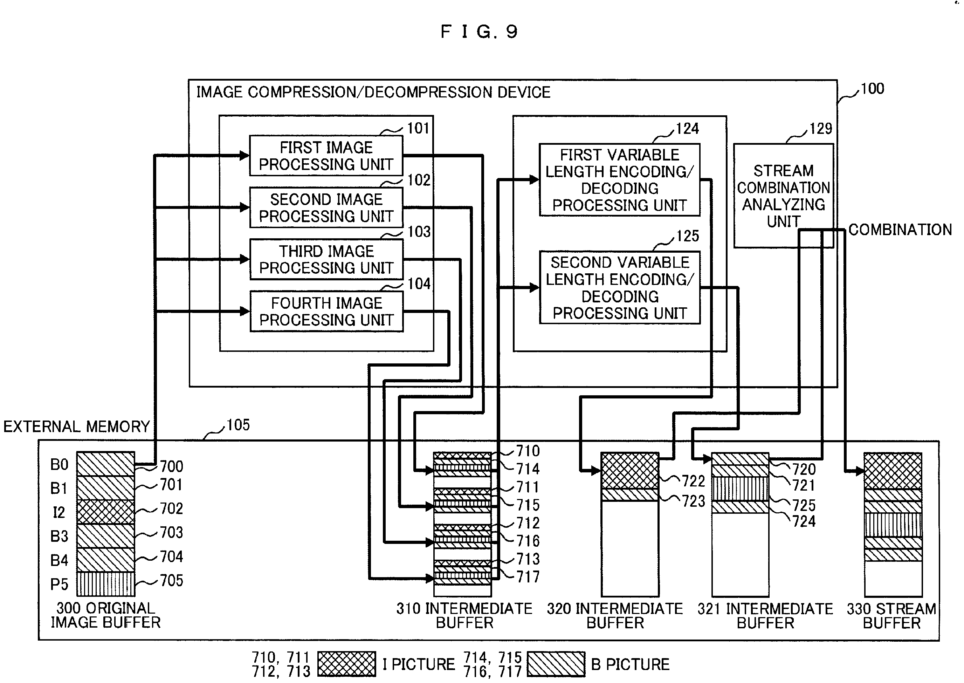

Next, a process when the image processing units of four systems and the variable length encoding/decoding processing units of two systems operate at the time of a compression operation in the image compression/decompression device 100 will be described with reference to FIG. 9. FIG. 9 is a diagram illustrating an example in which data is transferred from the external memory to the image processing unit and the variable length encoding/decoding processing unit when the image processing units of four systems and the variable length encoding/decoding processing units of two systems operate at the time of a compression operation.

The image processing units 101, 102, 103, and 104 receive the images from the image buffer 300 in a compression order (I2, B0, B1, ...), and sequentially store the interim data in the intermediate buffer 310 divided into four. For an original image 702 of "I2,", the image processing unit 101 stores the interim data in 710 of the intermediate buffer 310, the image processing unit 102 stores the interim data in 711 of the intermediate buffer 310, the image processing unit 103 stores the interim data in712 of the intermediate buffer 310, and the image processing unit 104 stores the interim data in 713 of the intermediate buffer 310. For an original image 700 of "B0," the image processing unit 101 stores the interim data in 714 of the intermediate buffer 310, the image processing unit 102 stores the interim data in 715 of the intermediate buffer 310, the image processing unit 103 stores the interim data in 716 of the intermediate buffer 310, and the image processing unit 104 stores the interim data in 717 of the intermediate buffer 310. Subsequently, the original images are stored in the intermediate buffer 310 divided into four sequentially like "B1 (P5, B3, B4...) ."

The variable length encoding/decoding processing units 124 and 125 read the interim data from the intermediate buffer 310 in the compression order, the variable length encoding/decoding processing unit 124 sequentially stores the compressed bit stream in an intermediate buffer 320 in units of frames, and the variable length encoding/decoding processing unit 125 stores the compressed bit stream in an intermediate buffer 321 in units of frames. For example, as illustrated in FIG. 9, when the variable length encoding/decoding processing unit 124 processes original images 702 and 703, and the variable length encoding processing unit 125 processes original images 700, 701, 704, and 705, a bit stream 722 of the original image 702 and a bit stream 723 of the original image 703 are stored in the intermediate buffer 320, and a bit stream 720 of the original image 700, a bit stream 721 of the original image 701, a bit stream 724 of the original image 704, and a bit stream 725 of the original image 705 are stored in the intermediate buffer 321.

In the intermediate buffers 320 and 321, the bit streams are input and mixed in units of frames as described above. The bit streams can be sorted such that a stream combination analysis module 129 (which will be described later) reads the bit streams from the intermediate buffers 320 and 321 in the compression order, combines the bit streams, and stores the bit streams in the stream buffer 330.

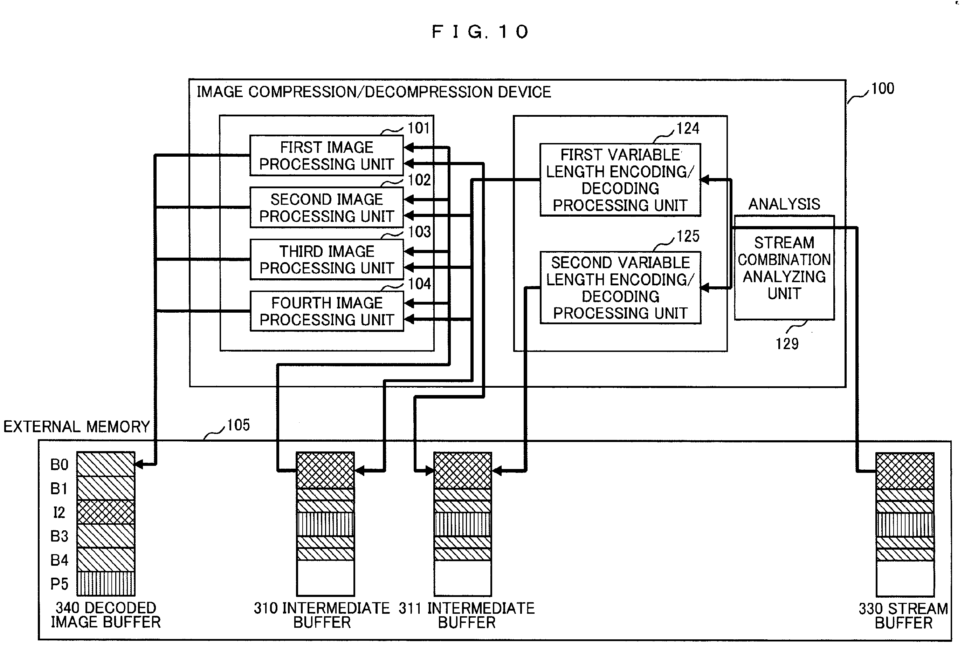

Next, a process when the image processing units of four systems and the variable length encoding/decoding processing units of two systems operate at the time of a decompression operation in the image compression/decompression device 100 will be described with reference to FIG. 10. FIG. 10 is a diagram illustrating an example in which data is transferred from the external memory to the image processing unit and the variable length encoding/decoding processing unit when the image processing units of fourth systems and the variable length encoding/decoding processing units of two systems operate at the time of a decompression operation.

In the parallel operation of the variable length encoding/decoding processing units 124 and 125, the stream combination analysis module 129 performs analysis for clipping compressed data in the stream buffer 330 in units of frames. Based on the analysis result, the variable length encoding processing units 124 and 125 read the bit streams from the stream buffer 330 in units of frames, the variable length encoding/decoding processing unit 124 sequentially stores the interim data in the intermediate buffer 310, and the variable length encoding/decoding processing unit 125 sequentially stores the interim data in an intermediate buffer 311.

The image processing units 101, 102, 103, and 104 select the intermediate buffers 310 and 311 in the frame order, and read the interim data. The generated decoded images are stored in the decoded image buffer 340 in the display order (B0, B1, I2, ...) .

As the used amount of the buffer is notified of, the image processing unit and the variable length encoding/decoding processing unit can detect a position up to which data is stored and can use the buffer as a ring buffer. Further, as such buffer control is performed, data buffering can be performed between the image processing unit and the variable length encoding/decoding processing unit having different processing units, and the compression process or the decompression process can be performed in real time.

### [Details of image compression process and image decompression process (particularly, process collaboration of image processing unit and variable length encoding/decoding processing unit)]

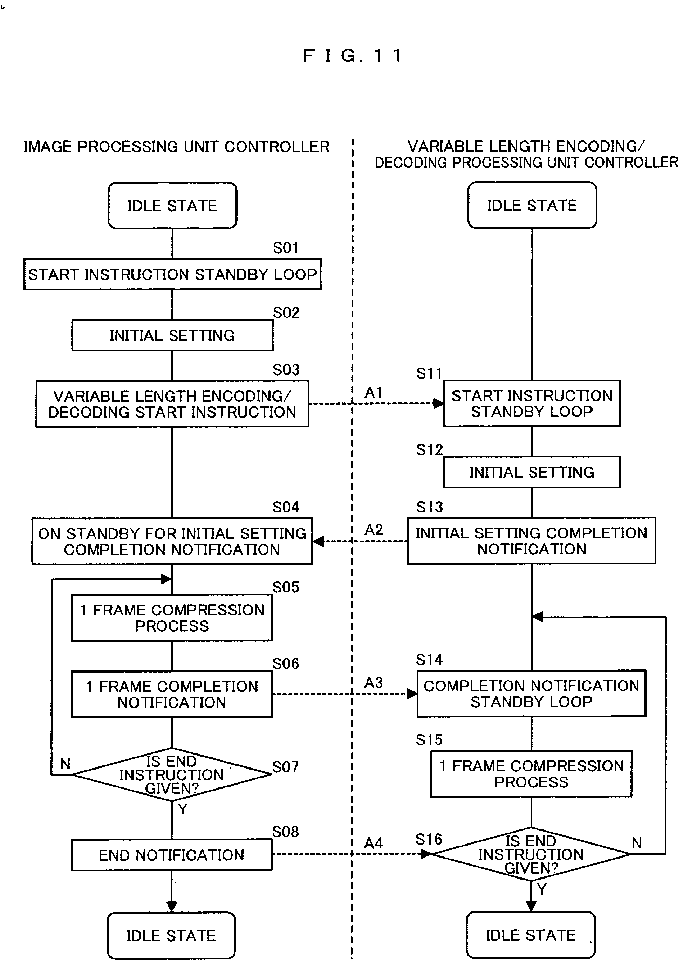

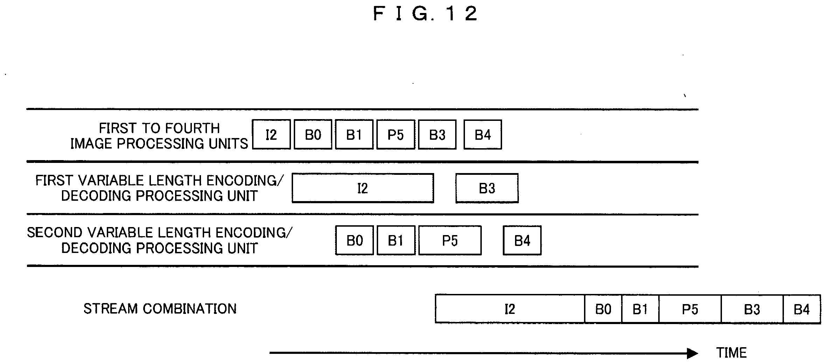

Next, a detailed process of the image compression process of the image compression/decompression device will be described with reference to FIGS. 11 and 12. FIG. 11 is a flowchart illustrating a detailed process of the image compression process of the image compression/decompression device. FIG. 12 is a timing chart illustrating pictures and process timings of the respective units in the image compression process.

The image processing unit controller 122 performs an initial setting on the image processing unit 101, ... according to a compression start instruction from a start instruction standby loop (S01) (S02). In this initial setting, the image processing unit 101, ... decides an operation mode, that is, the parallel number of the image processing unit 101, ... based on an input parameter. Then, the image processing unit controller 122 gives a variable length encoding/decoding start instruction to the variable length encoding/decoding processing unit controller 130 (S03, A1), and is on standby until an initial setting completion notification is given from the variable length encoding/decoding processing unit controller 130 (S04).

The variable length encoding/decoding processing unit controller 130 transitions from the start instruction standby loop (S11) to an initial setting (S12), and gives the initial setting completion notification to the image processing unit controller 122 when the initial setting is completed (S13 and A2). In this initial setting, the variable length encoding/decoding processing unit 124, ... decides an operation mode, that is, the parallel number of the variable length encoding/decoding processing unit 124, ... based on an input parameter.

The image processing unit 101, ... repeatedly performs the compression process in units of frames until an end instruction is given (S05 and S07), and gives a one frame completion notification to the variable length encoding/decoding processing unit controller 130 each time the process is completed (S06 and A3). The variable length encoding/decoding processing unit 124 receives the completion notification from the image processing unit 101, ..., starts the compression process of one frame (S14), and repeats the compression process until an end notification is given (S15).

There are cases in which the variable length encoding/decoding processing unit controller 130 receives the one frame completion notification from the image processing unit controller 122 while the variable length encoding processing unit is performing the 1-system operation. In this case, it is desirable to hold the notification and process the held frame after the completion.

On the other hand, while the variable length encoding/decoding processing unit is performing the 2-system operation, it is possible to process two frames simultaneously by causing the variable length encoding/decoding processing unit that is not processing to process while one frame is being processed as in the timing chart of the compression process illustrated in FIG. 12. As illustrated in FIG. 12, while the first variable length encoding/decoding processing unit is processing "I2," the second variable length encoding/decoding processing unit processes "B0," "B1," and "P5." Thereafter, the stream combination analysis module 129 which will be described later is combined in the compression order, and thus it is possible to execute the parallel operation.

Further, there are cases in which the one frame completion notification is received from the image processing unit while the variable length encoding/decoding processing unit is performing the 2-system operation process. In this case, it is desirable to hold the notification, similarly to the 1-system operation and process the held frame after the completion. At the time of the 2-system operation, the completion orders are sequential according to a bit amount of each frame, but in the present embodiment, a function of combining the steam data in the frame order is provided, and thus it is possible to generate the stream in the frame order (I2, B0, B1, P5, B3, B4, ...) illustrated in FIG. 12.

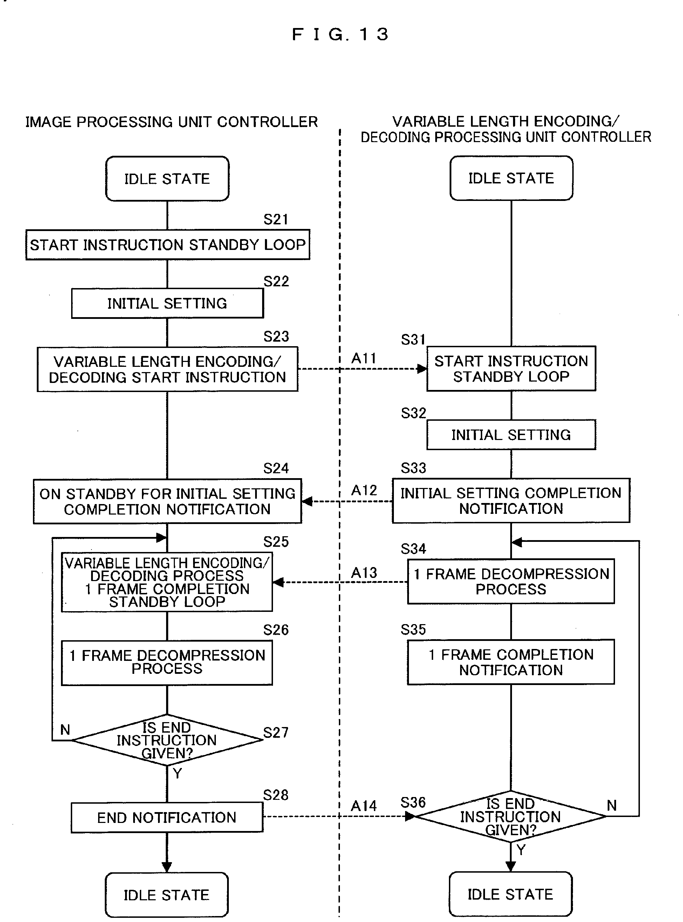

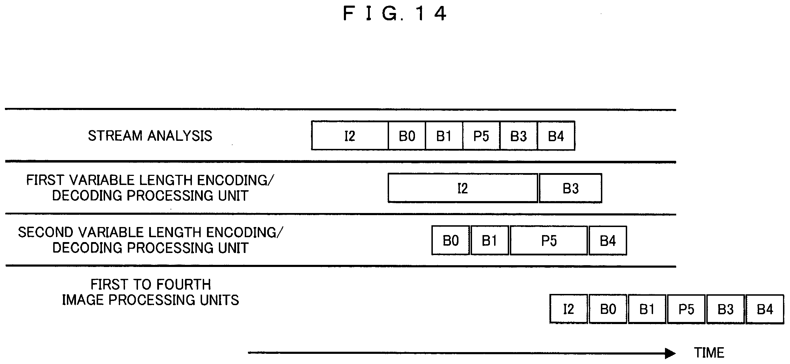

Next, a detailed process of the image decompression process of the image compression/decompression device will be described with reference to FIGS. 13 and 14. FIG. 13 is a flowchart illustrating a detailed process of the image decompression process of the image compression/decompression device. FIG. 14 is a timing chart illustrating pictures and process timings of the respective units in the image decompression process.

The image processing unit controller 122 performs the initial setting on the image processing unit 101, ... according to a decompression start instruction from the start instruction standby loop (S21) (S22). In this initial setting, the image processing unit 101, ... decides an operation mode, that is, the parallel number of the image processing unit 101, ... based on an input parameter. Then, the image processing unit controller 122 gives the variable length encoding/decoding start instruction to the variable length encoding/decoding processing unit controller 130 (S23 and A11), and is on standby until the initial setting completion notification is given from the variable length encoding/decoding processing unit controller 130 (S24).

The variable length encoding/decoding processing unit controller 130 transitions from the start instruction standby loop (S31) to an initial setting (S32), and gives the initial setting completion notification to the image processing unit controller 122 when the initial setting is completed (S33 and A12). In this initial setting, the variable length encoding/decoding processing unit 124, ... decides an operation mode, that is, the parallel number of the variable length encoding/decoding processing unit 124, ... based on an input parameter.

The variable length encoding/decoding processing unit 124, ... repeatedly performs the decompression process in units of frames until the end notification is given (S34 and S36), and gives the one frame completion notification to the image processing unit each time the process is completed (S35 and A13). The image processing unit 101, ... receives the completion notification from the variable length encoding/decoding processing unit, starts the decompression process of one frame, and repeats the decompression process until the end instruction is given (S25, S26, and S27).

In the 2-system operation, the variable length encoding/decoding processing unit controller has to allocate the variable length encoding/decoding process in units of frames. As illustrated in the timing chart of the decompression process of FIG. 14, it is possible to perform the frame unit process even in the 2-system operation by analyzing the stream data and detecting the head of the frame. While the first variable length encoding/decoding processing unit is processing "I2," the second variable length encoding/decoding processing unit processes "B0," "B1," and "P5. "

Further, the completion orders of the respective frames are sequential according to an amount of bits to be decompressed. Since the variable length encoding/decoding processing unit controller 130 performs an allocation of the process to each system and management thereof in the frame order, at this time, the variable length encoding/decoding processing unit controller 130 gives the notification to the image processing unit in the frame order, and thus it is possible to perform the decompression process without the sequential frame order (I2, B0, B1, P5, B3, B4, ...) of the image processing units.

### [Stream combination analysis block unit 129]

Next, the stream combination analysis block unit 129 will be described in detail. The stream combination analysis block unit 129 is a part that functions, for example, when the variable length encoding/decoding processing units 124 and 125 perform the parallel operation, and combines the stream data of the frame units generated by the variable length encoding/decoding processing units 124 and 125 in the compression process.

The stream combination analysis block unit 129 may be mounted as hardware or may be a process of notifying a host CPU (not illustrated) of a delimiter between frames in advance, sequentially reading streams of the respective frames at a host side, and combining the streams on software. At the time of the decompression process, analysis of clipping the compressed stream data to be decompressed in units of frames serving as the processing unit of the variable length encoding/decoding processing units 124 and 125 is performed.

For example, when a header of an AU delimiter is added to the header of each frame, and a unique AU delimiter code (0x09) is added to the header of each picture, it is possible to determine the delimiter of the frame at the time of analysis by searching the unique ID. Further, the present analysis process may be performed such that the host CPU (not illustrated) detects the frame delimiter in advance, and notifies the present circuit of each frame delimiter information, and each of the variable length encoding/decoding processing units 124 and 125 performs reading from an external stream buffer based on the frame delimiter information.

### [Clock control units 123 and 131]

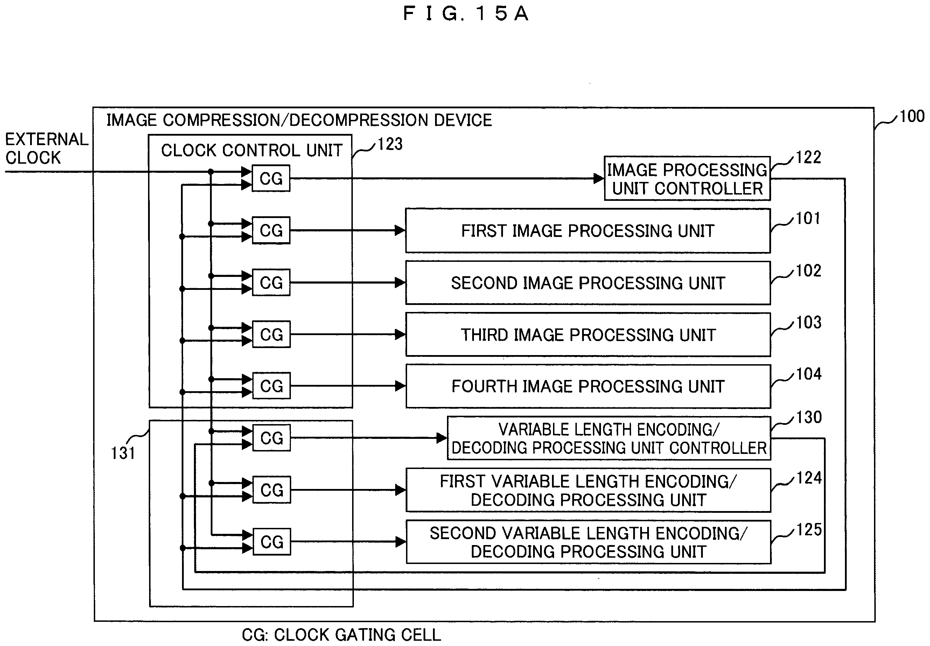

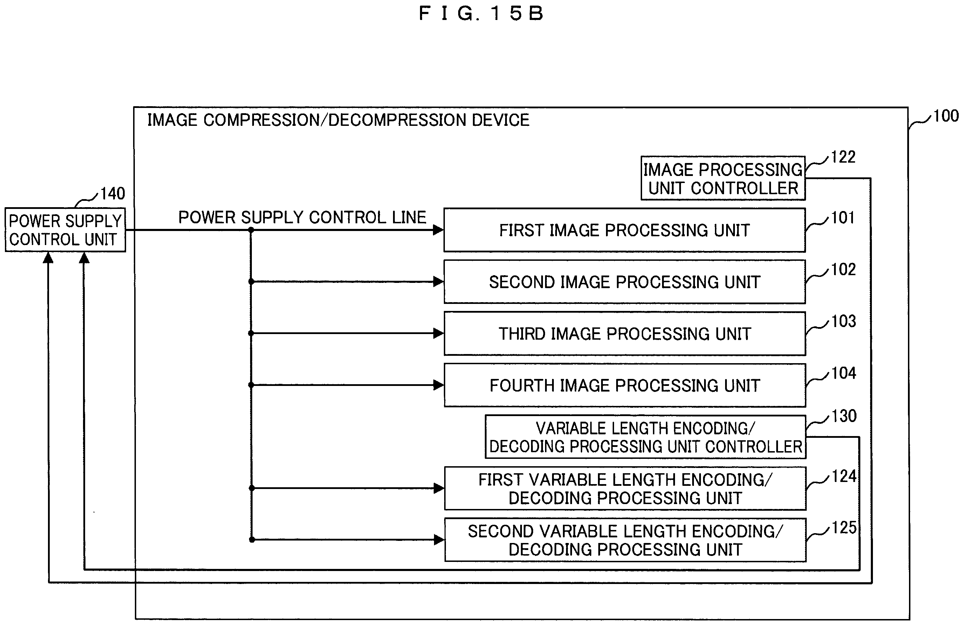

Next, clock control units 123 and 131 will be described with reference to FIGS. 15A and 15B. FIG. 15A is a diagram illustrating an example of controlling the parallel process of the image processing unit and the variable length encoding/decoding processing unit according to clock control. FIG. 15B is a diagram illustrating an example of controlling the parallel process of the image processing unit and the variable length encoding/decoding processing unit according to power control.

An external clock is distributed to the respective processing units by performing gating (opening and closing of a gate) for the image processing units 101, 102, 103, and 104 and the variable length encoding/decoding processing units 124 and 125 through the clock control unit of the image compression/decompression device as illustrated in FIG. 15A. The clock control units 123 and 131 are configured to include clock gating cells (CG) connected to the image processing unit controller 122 and the variable length encoding/decoding processing controller 130 and perform clock gating control on the image processing unit controller 122 and the variable length encoding/decoding processing controller 130 individually. Thus, it is possible to control the image processing unit and the variable length encoding/decoding processing unit individually. Here, the clock is supplied when a CG control signal is 1, and the clock is not supplied when the CG control signal is 0.

In a clock tree (a component connected to the clock) distributed to the processing units after the clock gating, when a fan-out (an upper limit number of connectable circuit elements) is large, large power consumption occurs only by supply of the clock. In the present embodiment, the clocks from the clock control units 123 and 131 to unused blocks are controlled according to operation mode selection of the image processing unit controller 122 and the variable length encoding/decoding processing controller 130, and thus a large power consumption reduction effect is obtained.

Further, similarly to the configuration of the clock control unit of FIG. 15A, a power supply control unit (a transistor) for interrupting power supply to the image processing unit and the variable length encoding/decoding processing unit that are not in the operation is provided in each gate in a circuit, and switching for the power supply control unit is performed according to the presence or absence of an operation as illustrated in FIG. 15B. It is desirable that a logic gate be inserted into an input unit of a block being operated from a processing unit to which electric power is not supplied so that a definite value is input. Thus, electric power is not unnecessarily supplied to the image processing unit and the variable length encoding/decoding processing unit that are not in the operation state, and thus it is possible to further reduce the power consumption.

### [Relation with encoding scheme specified in H.264]

As described above, in the image processing unit, since the process in each pipeline has the processing time depending on the number of pixels in the macro block, it is possible to specify a necessary process speed according to the pixel rate calculated by (resolution × frame rate) at the time of operating. Meanwhile, in the process of variable length encoding/decoding processing unit, the processing timing thereof changes depending on the bit rate of the bit stream rather than the pixel rate. Thus, the concept of the present invention lies in that the image processing unit decides the parallel number based on the pixel rate (= resolution × frame rate), and the variable length encoding/decoding processing unit decides the parallel number based on the bit rate.

Meanwhile, in the H.264 standard, either of the arithmetic coding and the variable length coding can be selected. In the profile specified in H.264, Context Adaptive Binary Arithmetic Coding (CABAC) can be used as the arithmetic coding scheme, and Context Adaptive Variable Length Coding (CAVLC) can be used as the variable length coding scheme.

In the present invention, particularly, when the compression technique of the CABAC using the arithmetic operation is used, the remarkable effect is obtained. The CABAC is a coding scheme in which a process of changing a prediction mode of an occurrence probability of a next bit is performed according to the occurrence of each bit of binary data. Thus, in a consecutive data string in one slice, a serial process is performed, and thus the processing time thereof significantly changes according to the number of bits to be processed. Thus, when the pixel rate is high but the bit rate is low, there are cases in which the parallel number of the variable length encoding/decoding processing unit is small. For this reason, only necessary minimum blocks are derived according to a final operation specification such that the image processing unit changes the parallel number according to the resolution and the frame rate, and the variable length encoding/decoding processing unit changes the parallel number according to the bit rate of the stream, and thus it is possible to reduce power consumption more precisely than in the related art.

Meanwhile, the CAVLC is a variable length coding scheme based on a variable length coding table. In this case, when each encoding code is processed, a plurality of tables that are prepared in advance are compared with the code to see if they are identical, and thus it is possible to process several bits to several tens of bits in one cycle. Thus, commonly, the CAVLC is higher in the bit rate that can be processed with the same system clock and the same circuit size than the CABAC. Thus, using this, a degree of parallelism of the variable length encoding/decoding processing unit may be controlled according to the CABAC or the CAVLC. For example, when a target to be processed is 100 Mbps or more, the variable length encoding/decoding processing controller 130 controls an operation of an unnecessary circuit in the case of the CAVLC by performing control such that two-parallelization is selected in the CABAC, and the 1-parallel process is performed in the case of the CAVLC, and thus it is possible to control the power consumption with a high degree of accuracy. Accordingly, the image compression/decompression device according to the exemplary embodiment of the present invention can select the optimal coding scheme according to the power consumption.

### [Encoding schemes other than H.264 and other embodiments]

The present embodiment has been described above in connection with the image compression/decompression device according to H.264, but in a hybrid coding scheme based on a DCT-based frequency transform process, a run length encoding process, or a variable length encoding process such as MPEG 1, 2, and 4, a method of independently controlling a degree of parallelism between a frequency processing unit and a variable length encoding/decoding block having the same characteristics which are one of the features of the present invention is effective.

Further, the present embodiment has been described in connection with the image compress/decompression circuit in which compression and decompression of an image are performed by a common circuit, but even when an image compression device that performs compression of an image and an image decompression device that performs decompression of an image are separately configured, the same effect is obtained.

Further, the interim buffers have been described as being arranged in the external memory, but even when a Static Random Access Memory (SRAM) is arranged in a circuit, and some or all of buffers are arranged in a compression/decompression circuit, the merits related to the power consumption and the RAM use amount do not change.

Further, even in still images as well as moving images, for still images represented by, for example, Joint Photographic Experts Group (JPEG), the same effect is obtained in an image compression/decompression process circuit that deal with various resolutions and bit rates.

As described above, according to the exemplary embodiment of the present invention, it is possible to implement the image compression/decompression process operation at optimal power according to system requirements, and it is possible to reduce the power consumption.

### REFERENCE SIGNS LIST

- 100: Image compression/decompression device
- 101: First image processing unit
- 102: Second image processing unit
- 103: Third image processing unit
- 104: Fourth image processing unit
- 105: External memory
- 106: Original image buffer unit
- 107: Inter search unit
- 108: Intra prediction mode determining unit
- 109: Intra prediction unit
- 110: Residual.calculating unit
- 111: DCT unit
- 112: Quantization unit
- 113: Zig-zag scan unit
- 114: Run length encoding unit
- 115: Run length decoding unit
- 116: Zig-zag scan unit
- 117: Inverse quantization unit
- 118: Inverse DCT unit
- 119: Residual calculating unit
- 120: De-blocking filter
- 121: External memory communication bus unit
- 122: Image processing unit controller
- 123: Image processing unit clock control unit
- 124: First variable length encoding/decoding processing unit
- 125: Second variable length encoding/decoding processing unit
- 126: Variable length encoding unit
- 127: Code buffer unit
- 128: Variable length decoding unit
- 129: Stream combination analyzing unit
- 130: Variable length encoding/decoding process controller
- 132: Parameter input unit (resolution and frame rate)
- 133: Parameter input unit (bit rate)

## Claims

1. A device that performs an image compression/decompression process of compressing original image data based on encoding and decompressing encoded data, the device comprising:
one or more image processing units each of which perform predicted image generation, differential image generation, frequency transform, quantization, and inverse quantization by intra prediction or inter prediction; and
one or more variable length encoding/decoding processing units each of which performs a variable length encoding/decoding process,
wherein a first parallel number is decided based on a resolution of an image or a frame rate, and the one or more image processing units perform a parallel process based on a degree of parallelism according to the first parallel number.

2. The image compression/decompression device according to claim 1,
wherein a second parallel number is decided based on a bit rate of a bit stream processed by the image compression/decompression device, and the one or more variable length encoding/decoding processing units perform a parallel process based on a degree of parallelism according to the second parallel number.

3. The image compression/decompression device according to claim 1,
wherein the one or more image processing units receive both of the resolution of the image and the frame rate or either of the resolution of the image and the frame rate as a parameter in order to decide the first parallel number.

4. The image compression/decompression device according to claim 2,
wherein clock supply to a clock tree of the image processing unit and the variable length encoding/decoding processing unit that are not in an operation state is interrupted based on the first parallel number or the second parallel number.

5. The image compression/decompression device according to claim 1,
wherein power supply of the image processing unit and the variable length encoding/decoding processing unit that are not in an operation state is interrupted based on the first parallel number or the second parallel number.

6. The image compression/decompression device according to claim 1,
wherein at least two image processing units are arranged, and the image processing units perform the parallel process on different macro block lines in the same frame.

7. The image compression/decompression device according to claim 2,
wherein at least two variable length encoding/decoding processing units are arranged, and the variable length encoding/decoding processing units are operated to process different frames in parallel.

8. The image compression/decompression device according to claim 2,
wherein the second parallel number is decided based on a coding scheme to be deal with.

9. The image compression/decompression device according to claim 2,
wherein the coding scheme is Context Adaptive Variable Length Coding (CAVLC) or Context Adaptive Binary Arithmetic Coding (CABAC).
